(19) Europäisches Patentamt
European Patent Office
Office européen des brevets

(11) Publication number: 0 147 064 A2

(12) EUROPEAN PATENT APPLICATION

(21) Application number: 84308178.7

(22) Date of filing: 26.11.84

(51) Int. Cl.[4]: A 01 N 57/22
A 01 N 57/24

(30) Priority: 28.11.83 US 555535

(43) Date of publication of application: 03.07.85 Bulletin 85/27

(84) Designated Contracting States: CH DE FR GB IT LI

(71) Applicant: THE DRUG SCIENCE FOUNDATION
171 Ashley Avenue
Charleston South Carolina 29425(US)

(72) Inventor: Brown, Thomas M.
213 Wesley Street
Clemson, South Carolina 29631(US)

(72) Inventor: Bryson, Patricia Karen
103 Folger Street
Clemson, South Carolina 29631(US)

(74) Representative: Harvey, David Gareth et al,
Graham Watt & Co. Riverhead
Sevenoaks Kent TN13 2BN(GB)

# (54) Synergistic insecticidal compositions and method of improving insecticidal compositions.

(57) The efficacy of an insecticide to which insects have developed resistance is improved by admixing the primary insecticide with a compound which phosphinylates those enzymes within the insects responsible for neutralizing the insecticide. Synergistic insecticidal mixtures contain at least one primary insecticide and a synergist therefor, the synergist having the formula

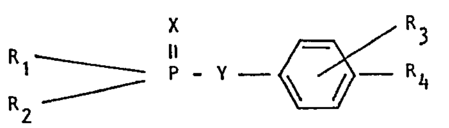

X and Y are each O or S, $R_1 = R_2$ and is an aryl, substituted aryl, heterocyclic, or substituted heterocyclic radical, $R_3$ is H or an alkyl radical and $R_4$ is an electron acceptor from the phenyl group to facilitate cleavage of the P-Y bond and is exemplified by $NO_2$, Cl and $NH_2$.

EP 0 147 064 A2

"SYNERGISTIC INSECTICIDAL COMPOSITIONS AND METHOD OF IMPROVING INSECTICIDAL COMPOSITIONS"

The present invention relates to synergistic insecticidal compositions and a method of improving insecticides such that insects which have developed resistance to certain insecticides can be controlled and/or annihilated with the particular insecticides.

In the development of an insecticide to be used for the control and annihilation of flies, mosquitos, milkweed bugs, tobacco budworms, rust-red flour beetles and the like, a number of factors need considering before commercial use of the particular insecticide. First of course the insecticide must have adequate efficacy for the particular insect such that the effective lethal dosage of the insecticide is practical, i.e., that the effective ingredient of the overall insecticide composition is at an adequately low level to ensure economical justification and that no adverse side effects are created thereby. Insofar as side effects are concerned, since the insecticidal composition will be generally sprayed or otherwise exposed to the atmosphere, it is imperative that the effective insecticidal constituent must not be toxic to humans, pets, livestock and wildlife other than the targeted population. As to toxicity, while a number

of insecticides are quite lethal to the targeted population, many also possess sufficient toxicity that they cannot be used for fear of immediate or delayed toxic reaction in humans, pets, livestock or wildlife and so on. It has been determined for example that certain insecticides create delayed neurotoxic reactions in hens. In fact, a generally accepted test for toxicity is to determine whether there is a delayed neurotoxicity in hens.

As certain insecticides have been continuously used commercially for the control and elimination of insects, the insects have developed a resistive mechanism to the particular insecticides. In general the insecticidal activity has entailed the inhibition of activity within the insect, such as for example, the inhibition of acetyl cholinesterase enzymes along the nerve cord. Resistance to the insecticide has, however, come about by virtue of enzymatic activity such as carboxyl esterase enzymes which chemically neutralize the insecticides against inhibition of the acetyl cholinesterase. Depending upon the particular insecticide being utilized the carboxyl esterase enzyme may chemically tie up, or chemically degrade, one or more molecules of insecticide per molecule of the esterase enzyme. Consequently such interaction renders

the insect resistant to the particular insecticide. Likewise other interactions may occur between insecticides and proteins or other enzymes within the insect.

In order to overcome the resistance to particular insecticides, others have heretofore discovered particular compounds which, when added to the insecticide, will act as a synergist therewith and overcome to some degree the resistive mechanism. The insecticide is then returned to an efficacious posture. Arend et al have disclosed a number of such synergists as set forth in D.O.S. 27 27 479. The synergists therein cover a wide range of compounds, including certain organophosphinates, though they are different from phosphinates according to the present invention. D.O.S. 27 27 479 further sets forth the efficacy of a large number of insecticides per se as well as the efficacy of the insecticides in admixture with the disclosed synergists. Further, Fukuto in the "Chemistry of Organic Insecticides", 1961 Ann. Rev. Entomol., 6:313 discusses the efficacy and toxicity of para-nitrophenyl dialkylphosphinates with the insecticidal efficacy of the compounds being directed to house flies. Likewise, Tahori et al in "Anticholinesterase Activity (In the Mediterranean

Fruit Fly) and Mouse Toxicity of Some New Organophosphorous Compounds", Ent. exp. & appl. 9(1966):99 disclose certain organophosphinate as insecticidal. Though Fukuto and Tahori et al discuss the insecticidal properties of certain organophosphinates, and though D.O.S. 27 27 479 discloses among many other candidates several organophosphinates as synergists for insecticides, there is no teaching or suggestion therein of the use as insecticidal synergists of the particular genus of organophosphinates according to the teachings of the present invention.

The present invention aims to provide an improved insecticidal composition that is efficacious against a targeted population while otherwise low in toxicity. Other aims are to provide an insecticidal composition and method that can overcome resistance of the insect to the primary insecticide being utilized.

Another aim is to provide an improved insecticidal composition that includes a particular group of organophosphinates as effective synergists.

As stated hereinbefore, enzymatic resistance is a problem and the present invention seeks to overcome enzymatic resistance to the efficacy of an insecticide by the addition of a particular

organophosphinate synergist in admixture with the insecticide.

According to the present invention, there is provided a synergist insecticidal mixture which comprises a primary insecticide and a synergist therefor, the synergist being an organophosphinate compound having the formula

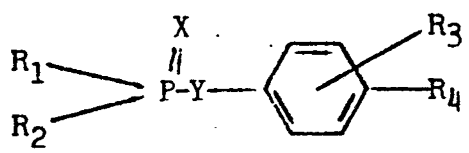

where X is 0 or S; Y is 0 or S; $R_1 = R_2$ and is an aryl, substituted aryl, heterocyclic, or substituted heterocyclic radical; $R_3$ is H or an alkyl radical; and where $R_4$ is an electron acceptor from the phenyl group to facilitate cleavage of the P-Y bond as exemplified by $NO_2$, Cl and $NH_2$.

More specifically, an improved insecticidal composition according to teachings of the present invention includes a carrier, a predetermined amount of a primary insecticide, and a synergistic quantity of preferably a 4-nitrophenyl bis substituted organophosphinate where the bis substituents are aryl groups, substituted aryl groups, heterocyclic groups, and substituted heterocyclic groups. Most preferably the organophosphinate synergist is a bis

substituted organophsophinate as defined herein where the substituent is a phenyl group or a 2-thienyl group.

The method according to the present invention for overcoming insect resistance to a particular primary insecticide comprises the steps of adding to the primary insecticide a compound having the general formula

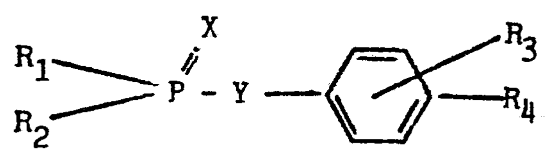

where X is 0 or S; Y is 0 or S; $R_1 = R_2$ and is an aryl, substituted aryl, heterocyclic, or substituted heterocyclic radical; $R_3$ is H or an alkyl radical; and where $R_4$ is an electron acceptor from the phenyl group to facilitate cleavage of the P-Y bond as exemplified by $NO_2$, Cl, and $NH_2$, the organophosphinate being added in a synergistic amount, and subjecting the insect to the admixture whereby the synergist neutralizes the resistance mechanism of the insect against the efficacy of the insecticide.

In a most preferred embodiment, the method according to the present invention comprises the steps of adding a synergistic amount of a 4-nitrophenyl bis substituted organophosphinate to the primary insecticide

wherein the substituents of the organophosphinate are aryl groups, substituted aryl groups, heterocyclic groups, or substituted heterocyclic groups.

The invention comprehends bis substituted organophosphinates as defined in the preceding paragraph for use as a synergist for an insecticidal composition.

The invention also comprehends a method of controlllng or eliminating an insect population, comprising forming an applicable insecticidal composition from the synergistic insecticidal mixture defined hereinbefore, said composition having the mixture dispersed in a liquid or solid particulate carrier, and appropriately exposing the composition to the insect population.

The invention will now be explained further in the following non-limitative description.

The improved insecticidal compositions according to the present invention comprise an efficacious amount of a primary insecticide, a carrier for the insecticide, an organophosphinate synergist that is stable, non-neurotoxic, and which will neutralize by phosphinylation certain enzymes within the body of the insect which otherwise would neutralize

the efficacy of the primary insecticide.

The admixture of carrier, insecticide and synergist, once produced is brought into contact with the target insect population in a predetermined quantity adequate to achieve a predetermined degree of insect mortality. Normally the insecticidal composition and synergist are dissolved in the carrier and the carrier is then emulsified in water. The emulsion is then generally sprayed over extended areas where the target insect population resides in an effort to control and/or annihilate it. However, insecticidal compositions according to the present invention may be otherwise embodied, e.g. as oil formulations, in which the carrier, insecticide and synergist are dissolved and/or emulsified. The compositions could be dust formulations in which the insecticide and synergist are deposited onto a fine particulate carrier compound such as talc. A dust type composition could be a wettable powder which includes a surfactant to permit suspension in water.

Insofar as the insecticidal compositions of the present invention are concerned, the primary insecticide may be any of the known insecticides or mixtures of insecticides, which when brought into contact and ingested by the insect, will inhibit acetylcholinesterase

enzymatic activity or otherwise inhibit vital physiological functions and thus lead to expiration of the insect. Such primary insecticides include without limitation carbaryl, methyl parathion, pirimiphos methyl; lindane; malathion; and permethrin. The amount of primary insecticide present in an overall composition will vary, depending upon the target insect population to which it is to be directed, as well as the particular synergist that is used in conjunction therewith. Clearly one skilled in the art, once knowledgable of the disclosure of the present subject matter can, without undue experimentation, determine an efficacious amount of primary insecticide that needs to be present in a particular overall composition in order to achieve the desired degree of mortality. Furthermore, as may be seen hereinafter, relative ratios of primary insecticide to synergist may vary considerably.

Carriers for the effective insecticidal ingredients may be any conventional carrier system that is commonly used for such purpose and which is suitable for the particular application to be made. Exemplary of conventional carrier systems are ethanol, acetone, and such oils as exemplified by Shellflex 210 oil, a mineral oil based product manufactured by Shell Chemical Company. Preferably, the primary insecticide

and synergist are dissolved in the carrier after which the carrier is formulated into an overall composition for e.g. spray application as desired. As mentioned above, however, other carrier types may be employed, such as the solid diluents. The overall insecticide composition, in addition to the carrier, such as an oil having the insecticide and synergist dissolved therein would normally further include a particular emulsifying agent that is preferably matched to the particular carrier, the insecticide and the synergist, and water. Matching of the emulsifying agent to the other compounds assists in achieving proper emulsification of the insecticide-synergist containing carrier oil in the water for spray or other application. Such is particularly important since the farmer, gardener, housewife or other user generally prepares the oil in water emulsion from an insecticidal concentrate. Other conventional additives may likewise be present.

Particular organophosphinates that are synergists for the insecticides according to the present invention include those organophosphinates that are defined by the formula

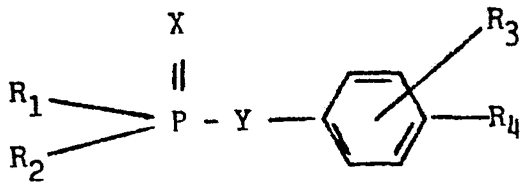

X is O or S. Y is O or S. $R_1 = R_2$ and is an aryl, substituted aryl, heterocyclic, or substituted heterocyclic radical. $R_3$ is H or an alkyl radical. $R_4$ is an electron acceptor from the phenyl group to facilitate cleavage of the P-Y bond as exemplified by $NO_2$, Cl and $NH_2$.

Examples of suitable substituents for the generic formula include without limitation $R_1$ $R_1$ groups of

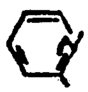 , 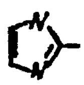 , 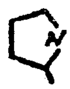 , 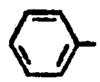 and 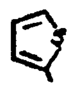 ; X groups of S and O; Y groups of O or S; $R_3$ groups of H and $CH_3$ and $R_4$ groups of $NO_2$, Cl, $NH_2$. Most preferably the organophosphinates according to the present invention have the formula

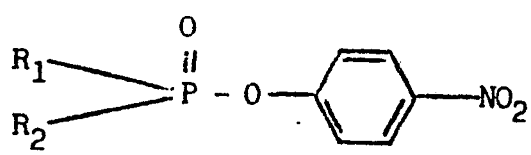

where $R_1$ and $R_2$ are phenyl or 2-thienyl.

In formulating a particular synergistic insecticidal composition according to the present invention, particular synergists as described herein may be included alone or in combination with other known synergists in like fashion as mentioned above with respect to the primary insecticides.

Particular phosphinates that serve as synergistic agents according to the present invention do not exhibit any delayed neurotoxicity characteristics. Confirmation of this is set forth in an article in the Journal of Neurochemistry, Vol. 23, Pages 785-789 by M.K. Johnson. Johnson concludes in Reviews in Biochemical Toxicology, vol. 4, pp. 141-212 that in order for an organophosphorous compound to create delayed neurotoxicity, it is necessary for two oxygen phosphorus linkages to be present in addition to that of the leaving group. Organophosphinates actually evaluated by Johnson do not include any of those according to the present invention but do have direct carbon-phosphorus linkages in the $R_1$ and $R_2$ positions in similar fashion to the bis substituted phosphinates as described above. Preferred organophosphinate synergists of the present invention are 4-nitrophenyl diphenylphosphinate and 4-nitrophenyl bis (2-thienyl) phosphinate, both of which exhibit enhanced results when utilized on insects in conjunction with a primary insecticide where the carboxyl esterase mechanism is present, which if not blocked by the synergist catalyzes degradation of the insecticide.

The following examples exemplify the present invention in more detail.

Examples 1-22

Tests were run on Tribolium castaneum adults (rust-red flour beetle) to determine the efficacy of phosphinates according to teachings of the present invention thereon. In each of the examples, the product or admixture being tested was dissolved in Shellflex 210 and chloroform and added to Whatman 1 filter paper after which chloroform was allowed to evaporate. Thereafter the beetles were confined for 24 hours at 25°C on the impregnated Whatman 1 filter paper with the percentage of mortality of the beetles being determined after the 24 hour period. A plurality of replicates of 40 beetles each were tested. Particular compounds tested per se, and admixtures of insecticide and synergist are set forth in Table I, along with the dosages utilized and the percent of mortality determined.

TABLE I

SYNERGISM OF INSECTICIDES BY ORGANOPHOSPHINATES IN TRIBOLIUM CASTANEUM ADULTS (RUST-RED FLOUR BEETLE)

| Example No. | Treatment | Dose % in oil | % Mortality |
|---|---|---|---|
| 1 | Shellflex 210 oil (carrier) | - | 0 |
| 2 | 4-nitrophenyl diphenyl-phosphinate | 2 | 0 |
| 3 | 4-nitrophenyl bis (2-thienyl) phosphinate | 2 | 0 |
| 4 | carbaryl alone | 2 | 2 |
| 5, 6 | carbaryl admixed with: | | |
| 5 | 4 nitrophenyl diphenyl-phosphinate | 2 | 15 |
| 6 | 4-nitrophenyl bis (2-thienyl) phosphinate | 2 | 13 |
| 7 | methyl parathion alone | 0.005 | 28 |
| 8, 9 | methyl parathion admixed with: | | |
| 8 | 4-nitrophenyl diphenyl-phosphinate | 0.005 | 59 |
| 9 | 4-nitrophenyl bis(2-thienyl) phosphinate | 0.005 | 33 |
| 10 | pirimiphos methyl alone | 0.05 | 34 |
| 11,12 | pirimiphos methyl admixed with: | | |
| 11 | 4-nitrophenyl diphenyl-phosphinate | 0.05 | 31 |
| 12 | 4-nitrophenyl bis (2-thienyl) phosphinate | 0.05 | 53 |
| 13 | permethrin alone | 0.5 | 22 |

TABLE I (Continued)

| Example No. | Treatment | Dose % in oil | % Mortality |
|---|---|---|---|
| 14,15 | permethrin admixed with: | | |
| 14 | 4-nitrophenyl diphenylphosphinate | 0.5 | 24 |
| 15 | 4-nitrophenyl *bis* (2-thienyl) phosphinate | 0.5 | 45 |
| 16 | lindane alone | 0.25 | 13 |
| 17 | lindane admixed with 4-nitrophenyl diphenylphosphinate | 0.25 | 20 |
| 18 | malathion alone | 0.5 | 22 |
| 19-22 | malathion admixed with: | | |
| 19 | 4-nitrophenyl diphenylphosphinate | 0.5 | 100 |
| 20 | 4-nitrophenyl diphenylphosphinate | 0.25 | 100 |
| 21 | 4-nitrophenyl *bis* (2-thienyl) phosphinate | 0.5 | 100 |
| 22 | 4-nitrophenyl *bis* (2-thienyl) phosphinate | 0.25 | 100 |

As can be seen from the results set forth in Table I, the carrier of course possesses absolutely no insecticidal properties, as expected. In Examples 2 and 3, however, the preferred candidates of the particular organophosphinates according to the present invention at a dosage rate of 2% in the mineral oil product, yielded no mortality. When, however, the 4-nitrophenyl diphenylphosphinate, (Example 5) and 4-nitrophenyl bis (2-thienyl) phosphinate (Example 6) was utilized in conjunction with carbaryl insecticide, a significant increase in mortality was noted above that of the carbaryl insecticide alone (Example 4). Likewise with malathion, methyl parathion, pirimiphos methyl and permethrin similar results were evident, i.e. the admixture of the primary insecticide and either the 4-nitrophenyl diphenylphosphinate or the 4-nitrophenyl bis (2-thienyl) phosphinate yielded a higher percentage of mortality of the beetles than when the insecticide was utilized alone. Table I therefore clearly demonstrates the synergistic effects achieved by utilizing the primary insecticide in conjunction with the synergist organophosphinate according to the present invention.

Examples 23-26

Examples 23-26 represent further tests of the

synergistic activity of 4-nitrophenyl bis (2-thienyl) phosphinate for Heliothis virescens (tobacco budworm). The particular effective ingredients were dissolved in acetone and applied by way of an Isco Model M microapplicator to the dorsal thoraces of tobacco budworm larva weighing 35 mg. Mortality was then assessed after 48 hours as an inability for the larvae to translocate when probed. The particular examples and results for same are set forth in Table II.

TABLE II

SYNERGISM OF METHYL PARATHION BY 4-NITROPHENYL BIS (2-THIENYL PHOSPHINATE) IN HELIOTHIS VIRESCENS

| Example No. | Treatment | Dose µg/larva | Mortality |
|---|---|---|---|
| 23 | 4-nitrophenyl bis (2-thienyl) phosphinate | 33 | 0/10 |
| 24 | methyl parathion | 17.5 | 2/10 |
|  | methyl parathion admix: |  |  |
| 25 | 4-nitrophenyl bis (2-thienyl) phosphinate | 33 | 3/10 |
| 26 | acetone | 1000 | 0/10 |

As can be seen from Table II, though 4-nitrophenyl bis (2-thienyl) phosphinate at a dosage of 33 micro grams

per larva showed no mortality, a like amount of same, when admixed with 17.5 micro grams of methyl parathion, yielded a mortality rate increase of 50% over a dosage rate of 17.5 micro grams per larva of methyl parathion alone. Such indicates synergistic activity of the 4-nitrophenyl bis (2-thienyl) phosphinate.

Examples 27-30

In Examples 27-30 efficacy of the synergistic action of the 4-nitrophenyl bis (2-thienyl) phosphinate was likewise tested in conjunction with malathion for *Oncopeltus fasciatus* (large milkweed bug). The particular compounds being tested were dissolved in acetone and applied by way of the Isco microapplicator to the dorsal thoraces of nymphs weighing 4.5 mg. Mortality was tested as the inability of a nymph to translocate when probed after 48 hours. Table III lists the particular compounds being tested, the dosage level and the mortality.

TABLE III

SYNERGISM BY 4-NITROPHENYL BIS (2-THIENYL) PHOSPHINATE IN ONCOPELTUS FASCIATUS

| Example No. | Treatment | Dose µg/nymph | Mortality |
|---|---|---|---|
| 27 | malathion | 0.22 | 2/10 |
| 28 | 4-nitrophenyl bis (2-thienyl) phosphinate | 0.11 | 0/10 |
| | malathion admix: | | |
| 29 | 4-nitrophenyl bis (2-thienyl) phosphinate | 0.11 | 9/10 |
| 30 | acetone | 1000 | 3/10 |

As can be seen from Table III, the 4-nitrophenyl bis (2-thienyl) phosphinate exhibited synergism when admixed with malathion. In fact as seen in Example 27, when malathion alone was applied at a dosage rate of 0.22 micro grams per nymph, a mortality of 2 out of 10 was observed, whereas when 1/2 the dosage level of malathion was admixed with a like amount of 4-nitrophenyl bis (2-thienyl) phosphinate mortality increased to 9 out of 10. When the 4-nitrophenyl bis (2-thienyl) phosphinate was utilized alone, no insecticidal activity was evident.

As can be seen from Examples 1-30, the preferred bis substituted organophosphinates according to the present invention in all instances demonstrated synergism with the primary insecticide. As can be seen from the examples, the relative dosage rates of synergist to primary insecticide ranged from 0.5:1 to about 5:1 parts by weight. As mentioned above, however, depending upon the particular efficacy of the specific primary insecticide and the actual blocking mechanism, the ratio of synergist to insecticide may vary considerably, falling in a range of from about 0.25 parts synergist to 1 part insecticide to about 10 parts synergist to 1 part insecticide. Such likewise takes into consideration economical considerations as to the particular insecticide and synergist being utilized.

Claims:

1. A synergistic insecticidal mixture comprising a primary insecticide and a synergist therefor, wherein the synergist is a compound having the formula

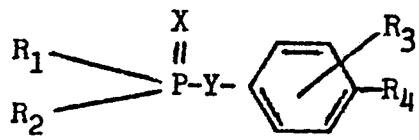

where X is 0 or S; Y is 0 or S; $R_1 = R_2$ and is an aryl, substituted aryl, heterocyclic, or substituted heterocyclic radical; $R_3$ is H or an alkyl radical; and where $R_4$ is an electron acceptor from the phenyl group to facilitate cleavage of the P-Y bond as exemplified by $NO_2$, Cl and $NH_2$.

2. An insecticidal mixture according to claim 1, wherein $R_1$ and $R_2$ are phenyl or 2-thienyl groups.

3. An insecticidal mixture according to claim 1 or claim 2, wherein the primary insecticide is selected from malathion, methyl parathion, carbaryl, pirimiphos, permethrin, and lindane.

4. An insecticide mixture according to claim 1 2 or 3, in association with, e.g. by dissolution in, a carrier therefor.

5. An insecticidal mixture according to claim 1, 2

or 3, dissolved in a carrier therefor and in admixture with an emulsifying agent and water.

6. An insecticidal mixture according to any of claims 1 to 5, wherein X and Y are each oxygen, $R_3$ is hydrogen, and $R_4$ is $NO_2$.

7. An insecticidal mixture according to any of claims 1 to 6, wherein the weight ratio of the synergist to the primary insecticide is from 0.25:1 to 10:1, and preferably is at least 0.5:1 e.g. 0.5:1 to 5:1.

8. A method of enhancing the insecticidal efficacy of a primary insecticide comprising the step of admixing it with a bis substituted, organophosphinate having the formula

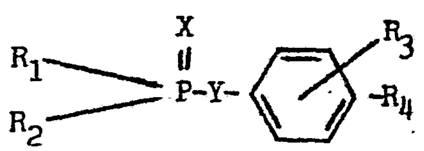

where X is O or S; Y is O or S; $R_1 = R_2$ and is an aryl, substituted aryl, heterocyclic or substituted heterocyclic radical; $R_3$ is H or an alkyl radical; and where $R_4$ is an electron acceptor from the phenyl group to facilitate cleavage of the P-Y bond as exemplified by $NO_2$, Cl and $NH_2$.

9. The method according to claim 8 wherein the

organophosphinate is 4-nitrophenyl diphenyl phosphinate or 4-nitrophenyl bis (2-thienyl) phosphinate.

10. The method according to claim 8 or claim 9, wherein the ratio of synergist to primary insecticide is at least about 0.5:1 parts by weight, e.g. 0.5:1 to 10:1.

11. The method according to any of claims 8 to 10, wherein the mixture is combined with a carrier therefor.

12. The method according to claim 11, wherein the carrier containing mixture is emulsified in water.